# EUROPEAN PATENT SPECIFICATION

(11) **EP 2 465 249 B1**
(45) Date of publication and mention of the grant of the patent: **17.10.2018**
(21) Application number: 10747748.1
(22) Date of filing: 13.08.2010
(51) Int. Cl.: H04L 29/12, H04W 84/12

(54) **LOCATION DETERMINATION DURING NETWORK ADDRESS ASSIGNMENT**
STANDORTBESTIMMUNG WÄHREND EINER NETZWERKADRESSENZUWEISUNG
DÉTERMINATION DE LOCALISATION DURANT L'ATTRIBUTION D'UNE ADRESSE DE RÉSEAU

(30) Priority: 13.08.2009 US 540883
(43) Date of publication of application: 20.06.2012
(73) Proprietor: QUALCOMM Incorporated, San Diego, California 92121-1714 (US)
(72) Inventor: GUM, Arnold Jason, San Diego, California 92121-1714 (US)
(74) Representative: Schmidbauer, Andreas Konrad
(86) International application number: PCT/US2010/045495
(87) International publication number: WO 2011/020037

(56) References cited:
- US-A1- 2005 125 550
- US-A1- 2006 159 071
- US-B1- 7 433 673
- POLK J SCHNIZLEIN M LINSNER CISCO SYSTEMS J: "Location Configuration Information for GEOPRIV Dynamic Host Configuration Protocol Option for ; draft-ietf-geopriv-dhcp-lci-optio n-02.txt" IETF STANDARD-WORKING-DRAFT, INTERNET ENGINEERING TASK FORCE, IETF, CH, vol. geopriv, no. 2, 21 August 2003 (2003-08-21), XP015001903 ISSN: 0000-0004
- ABBOTT N: "Alternatives for providing routing and location information to support emerngency calling from IP enterprises" NENA TECHNICAL INFORMATION DOCUMENT, XX, XX, 3 October 2003 (2003-10-03), pages 1-16, XP002323684

## Description

### BACKGROUND

### Field:

The subject matter disclosed herein relates to determining location information of a client device.

### Information:

Internet calling devices, such as voice over Internet protocol (VoIP) devices, for example, continue to increase in popularity. Such devices may utilize VoIP to transmit/receive voice over the Internet to/from a remote voice-capable device. During operation, an Internet-enabled calling device may be connected to the Internet via a network entity such as a gateway or router. The router or gateway is typically allocated a network IP address through (Dynamic Host Configuration Protocol) DHCP and then allocates virtual network addresses to the attendant client devices including any VoIP-capable device. Once the client device is connected to the Internet, a call from the client device may be routed through the Internet and to existing telephone networks, for example. Such a calling device may therefore be used to make a telephone call from locations having Internet connectivity using VoIP or similar technology.

For conventional land lines, an emergency-911 infrastructure is typically used in routing emergency calls. Such an infrastructure may use an Automatic Location Identification (ALI) database that associates telephone numbers of land lines with physical locations of the land lines. Using such a database, an emergency-911 infrastructure may route an emergency call from a land line number to a public safety access point (PSAP) responsible for the physical location of the land line initiating the call. The PSAP may then connect the emergency call to appropriate emergency services for that service area. In contrast, an Internet calling device, where the Internet address was dynamically or virtually assigned, is generally not associated with a fixed and/or known location. Therefore, the emergency-911 infrastructure cannot rely upon an ALI database to provide location information for an emergency VoIP call from a potentially mobile calling device to the appropriate PSAP for that service area.

US 2006/159071 discloses a method for starting an IP station. Therein, a subnet location information is stored in a memory of an administration server. In response to a lease request, a station receives a lease with the stored location information and emits a registration request containing the location information.

US 7 433 673 discloses a method for providing location information to a WLAN. Therein, identifiers and geographical locations of wireless access points are stored in a correlation database. In reaction to an emergency call, a WLAN control system retrieves an identifier in the message and queries the correlation database.

### BRIEF DESCRIPTION OF THE FIGURES

Non-limiting and non-exhaustive features will be described with reference to the following figures, wherein like reference numerals refer to like parts throughout the various figures.
FIG. 1 is a schematic diagram of a communication network, according to an implementation.
FIG. 2 is a schematic diagram of a communication network, according to another implementation.
FIG. 3 is a flow diagram of a process for determining a physical location of a client device, according to an implementation.
FIG. 4 is a schematic diagram of a device capable of communication with a wireless network, according to an implementation.
FIG. 5 is a schematic diagram of a device capable of communication with a network, according to another implementation.
FIG. 6 is a flow diagram of a process for determining a physical location of a client device, according to an implementation.

### SUMMARY

The invention is defined in the independent claims. Additional features of the invention are provided in the dependent claims.

### DETAILED DESCRIPTION

Reference throughout this specification to "one example", "one feature", "an example" or "a feature" means that a particular feature, structure, or characteristic described in connection with the feature and/or example is included in at least one feature and/or example of claimed subject matter. Thus, the appearances of the phrase "in one example", "an example", "in one feature" or "a feature" in various places throughout this specification are not necessarily all referring to the same feature and/or example. Furthermore, the particular features, structures, or characteristics may be combined in one or more examples and/or features.

In an implementation, a client device communicating via a network may receive information from the network regarding its physical location in response, at least in part, to the client device requesting an assignment of a network address, a direct request for location, and/or other query. Here, such a network address may comprise an identification (e.g., numerical or alphanumerical) that may be assigned to devices participating in a network such as an IP address. Location information may comprise a street address, neighborhood name, community name, geodetic coordinates (such as latitude, longitude, altitude), and/or information that may be useful to at least approximately identify a location of a client device, for example, or region surrounding a client device, for example. Such a client device may comprise a VoIP-enabled telephone or computing device, for example, or, alternately, an intermediary device such as a wireless access point. Such location information may be useful if an emergency call is to be made from an end-client device so that emergency services may quickly respond to the physical source of the emergency call. An Internet client device may, thus, acquire location information from an Internet server or wireless router; that information may be used to provide location to an emergency service provider if making an emergency call. In a particular implementation, a client device may acquire such location information at the time the client device begins to communicate with a network, such as in response to a request for an assignment of a network address. Here, the client device may begin to communicate with a network potentially well before the client device is used to make an emergency call and/or to execute other location-enabled application. Accordingly, the client device may learn of its physical location and store such location information to be used if needed. Of course, such location information may be used for a number of applications and is not limited in use for emergency services, and claimed subject matter is similarly not so limited.

A client device may communicate to a network through a wireless router, as explained in detail below. A network to which a client device is communicatively connected may include a local area network (LAN), a wide area network (WAN), and/or the Internet, for example. In one scenario, the physical location of a client device may not be known by the network, but the physical location of a wireless router serving the client device may be known. Accordingly, information regarding a physical location of a client device received by the client device may comprise a street address, city block region, and/or geodetic coordinates, just to name a few examples, of the location of the wireless router used by the client device. In this fashion, a physical location of the client device itself may be at least approximately determined since a wireless router may be physically located relatively near a client device. Such an approximation may be sufficient to properly route, for example, an emergency call to a nearest public safety answering point (PSAP). In another particular implementation, the physical location of a client device may be estimated if, for example, a wireless router or other portion of a network includes stored information regarding the physical location of the client device, as explained in further detail below. Of course, such processes of determining a physical location of a client device are merely examples, and claimed subject matter is not so limited.

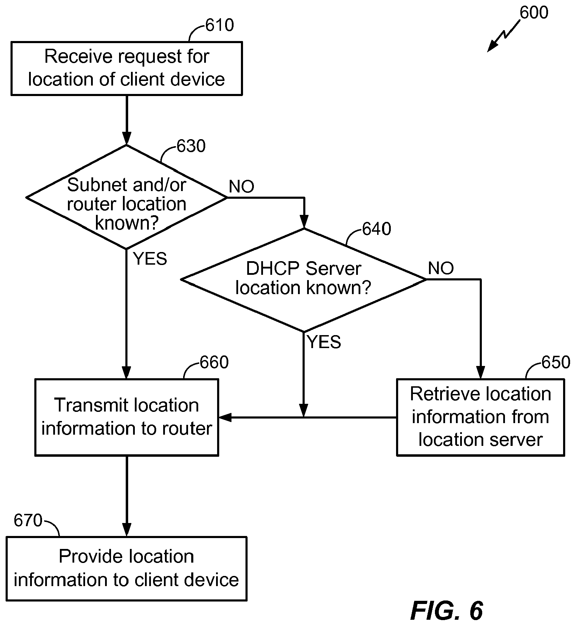

As explained above, the physical location of a wireless router may be known, but this is not always the case. For example, if a wireless router is maintained by an Internet service provider (ISP), then the physical location of the wireless router may be known if the ISP maintains records that include such information. On the other hand, a wireless router, such as a wireless 802.11 router, and/or a Bluetooth access point, may be hosted or maintained in a home, for example, wherein the wireless router and/or access point may not be aware of its own location, such location having not been stored onto the wireless router. Accordingly, identifying the physical location of a client device may comprise a process, such as process 600 shown in FIG. 6 for example, which is carried out until such identification may be made. For example, at block 610, a request for a location of a client device may be received. After determining at block 630 that the physical location of a wireless router is not known, then a subnet may also be associated with a physical location and/or region that are served by the subnet. In one implementation, a wireless router may request and store a location at power-on/address assignment. Client devices may then query the wireless router for a location at any time. In this embodiment, such a process may allow the location of the wireless router to be based, at least in part, on the location of a nearby network entity such as a hub, router, or gateway that provides, for example, cable modem connections to multiple houses. Thus, the typically non-mobile wireless router may have a location that is relatively accurate at least to the block area being served. Such a physical location and/or region served by the subnet or wireless router may be used as an approximate physical location of a client device.

Continuing with process 600 at block 630, if a physical location of a subnet and/or wireless router are not available for some reason, then a physical location of a dynamic host configuration protocol (DHCP) server hosted by an ISP, for example, may be used as an approximate physical location of a client device. Or, in another implementation, such a DHCP server may maintain information regarding the physical location of a client device, wherein such information may be utilized if it is available. For example, an ISP may have a service address database that allows a one to one mapping between assigned IP addresses and service addresses. Or, in a particular implementation, a DHCP server or other server may maintain physical location information for one or more wireless routers and/or client devices, as explained in further detail below.

Still continuing with process 600, after determining at block 640 that a physical location of a DHCP server is not known or not available for some reason, or if the DHCP server does not maintain information regarding the physical location of a particular client device, then, at block 650, a location server or, alternately, an address database server, may provide such information, which may be included in a database stored in a memory device at the location server. For example, such a database may comprise signals stored in a memory or device state that associate a particular network port or address with a physical location of a wireless router, based, at least in part, for example, on an ISP customer billing address. Such a network address and physical location information may be transmitted to a DHCP server or other server, where the network address and physical location information may be stored or retransmitted to a wireless router, for example, at block 660. Such location information may then be provided to a client device, at block 670, indicating at least an approximate physical location of a client device in communication with the wireless router. Of course, such processes of determining a physical location of a client device are merely examples, and claimed subject matter is not so limited.

A client device may store physical location information to be selectively included in subsequent communications transmitted via the network. For example, a VoIP telephone may receive and store information regarding its physical location so that an emergency call, such as a 911 call for example, may include information regarding the physical location of the VoIP telephone. A client device may update stored physical location information stored in a memory from time to time. For example, if a client device comprises a mobile device whose physical location changes from time to time, the client device may receive and store updated and current location information. In another example, a client device may query a management information base (MIB) maintained or other stored information on a wireless router in real time with a request for updated and current location information.

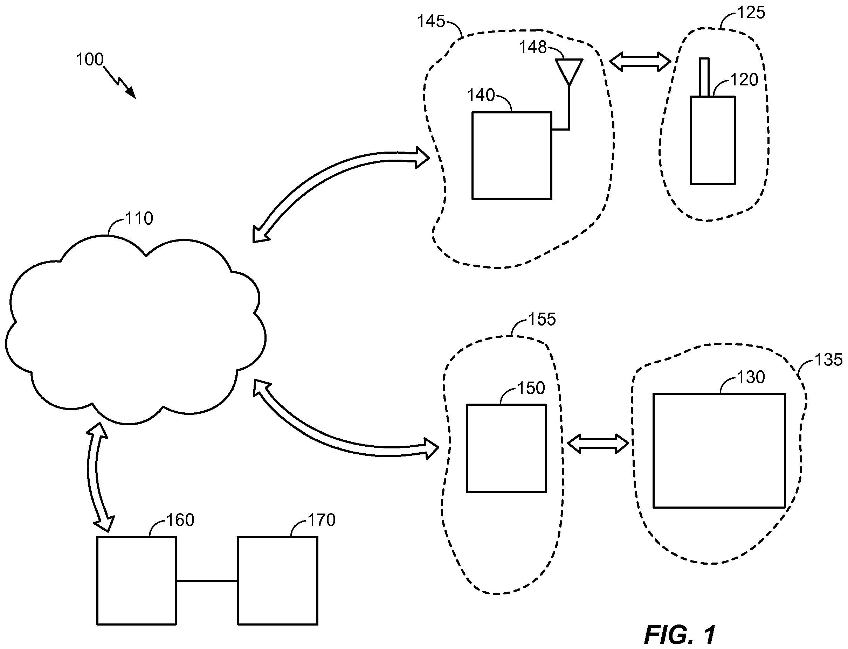

FIG. 1 is a schematic diagram showing a communication network 100, according to an implementation. Such a network may include the Internet 110, routers 140 and 150, and client devices 120 and 130, for example. A telephone network 160, which may comprise a public switched telephone network (PSTN) for example, may also be communicatively connected to the Internet 110. Such a telephone network may route emergency-911 calls to PSAP 170, as described above. Other portions of network 100 may include a LAN and/or WAN, for example, though such portions are not shown in FIG. 1 to maintain clarity. Though other types of client devices are possible, client device 120 may comprise VoIP-enabled wireless and/or mobile device, such as a cellular phone, a personal digital assistant, and/or a laptop computing device, for example. Client device 130 may comprise a computing device that may or may not be wireless or portable, such as a VoIP-enabled desktop computer or a VoIP landline telephone, for example. Wireless router 140 may comprise a device capable of receiving and transmitting wireless signals from/to client device 120 via an antenna 148, for example. Wireless router 140 may further communicate with Internet 110 directly or via a LAN and/or WAN, though claimed subject matter is not so limited. In one particular implementation, wireless router 140 may comprise a relay to receive wireless signals from client device 120 and re-transmit such signals through network 100, as well as receive signals from network 100 and re-transmit such signals wirelessly to client device 120. In a particular example, wireless router 140 may comprise a cellular tower and/or a cellular base station which may host a DHCP client to communicate with the Internet.

Router 150 may comprise a device capable of receiving and transmitting signals from/to client device 130, for example. Router 150 may further communicate with Internet 110 directly or via a LAN and/or WAN, though claimed subject matter is not so limited. Router 150 may comprise an attached cable or digital subscriber line (DSL) and/or modem to provide connectivity to a wired network, for example. In one particular implementation, router 150 may comprise a relay to receive signals from client device 130 and communicate such signals onto network 100, as well as receive signals from network 100 and communicate such signals to client device 130. In a particular example, router 150 may comprise a DHCP client hosted by an ISP to enable communication with Internet 110. In another particular implementation, router 150 may comprise a wireless router or wireless access point (WAP) that allows wireless communication devices to connect to a wireless network using Wi-Fi, Bluetooth, and/or other standards, for example. Such a Wireless router or WAP may connect to a wired network to relay information between wireless devices (such as computers or printers) and wired devices on the network, for example. Of course, such descriptions of routers and wireless access points are merely examples, and claimed subject matter is not so limited.

Client device 120, which may comprise a mobile and/or wireless device, may be physically located in a region 125 at a particular time, for example. However, such a mobile device may move to a different region at another time. Accordingly, in a particular implementation, region 125 may be defined as a region that includes a wireless router 140 that is communicatively connected with a mobile client device at a particular time. Determining a physical location of such a mobile client device may involve a process of locating the client device using a satellite positioning system (SPS), wherein the client device determines its position and stores such information and/or transmits such information to wireless router 140. Such location information may subsequently be forwarded to a PSAP in the case of an emergency call, for example. If, however, client device 120 is not SPS-enabled or is in a region lacking sufficient SPS signals, where, for example, a physical structure may block a view to one or more satellites, then a physical location of client device 120 may instead be determined using processes described below. For example, at a particular time, mobile client device 120 located in a first wireless coverage area may first communicate with a particular wireless router or other wireless transceiver. But such a mobile client device 120, at a later time, may subsequently communicate with another wireless router or wireless transceiver as the client device moves into a new wireless coverage area. Accordingly, because the physical location of a mobile client device 120 may change, wireless router 140 corresponding to the mobile client device may also change. In contrast, however, client device 130, being stationary and not mobile, for example, may correspond to a router 150, physically located in region 155. In the latter case, router 150 may be physically located relatively near client device 130 so that the physical location of a region 135 of client device 130 may be at least approximately determined from knowing the physical location of region 155, as explained below. Similarly for the former case, wireless router 140 currently associated with mobile client device 120 may be physically located relatively near client device 120 so that the physical location of a region 125 may be at least approximately determined from knowing the physical location of region 145.

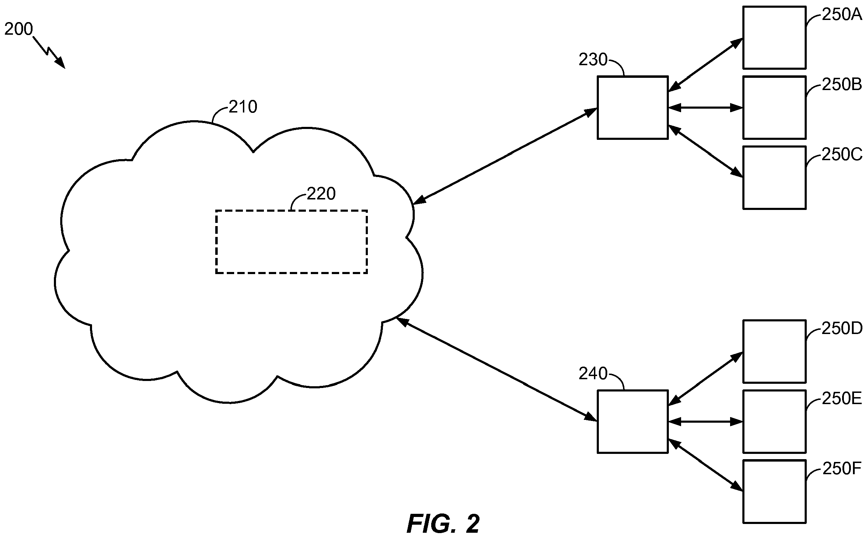

FIG. 2 is a schematic diagram showing a communication network 200, according to another implementation. Such a network includes a network 210 such as a LAN, WAN, and/or Internet 110, a DHCP server 220, wireless access points (WAPs) or wireless routers 230 and 240, and client devices 250A-F, for example. DHCP server 220 may communicate with, and/or manage wireless routers 230 and 240 independently of one another. Other wireless routers may be present in network 200 but are not shown for the sake of clarity. In an alternative implementation, client devices 250A-F may access network 210 via a hub (such as for cable) and/or a DSL access multiplier (DSLAM) (not shown). Such a hub and/or DSLAM may be located in a residential subdivision, for example, whereas a DHCP server may be city-wide. Accordingly, a hub and/or DSLAM, serving relatively few homes in a neighborhood, may provide at least an approximate location.

As depicted in FIG. 2, wireless router 230 may host client devices 250A-C while wireless router 240 may host client devices 250D-F. In an illustrative example, wireless router 230 may be relatively near client devices 250A-C, which may be physically located at a first address. In particular, client device 250A may comprise a VoIP-configured computing device at a house having a first street address, client device 250B may comprise a VoIP-configured computing device at the same street address, and client device 250C may comprise another VoIP-configured computing device at the same street address.

Continuing with the illustrative example, wireless router 240 may be relatively near client devices 250D-F, which may be physically located in a second street address. In particular, client devices 250D-F may comprise VoIP-configured computing devices each located at a common street address, for example. In a particular implementation, information regarding such street addresses of client devices 250 may not be available to DHCP server 220 or any other component of network 200, though information regarding a physical location of wireless routers 230 and 240 may be available, as discussed in further detail below. In another particular implementation, involving cable modems and a DSL for example, an internet service provider (ISP) may have a particular physical line or port on a hub or DSL Access Multiplier associated with a particular address. Thus, such a physical address, which may be included in a database, may be provided to a local wireless router where it may then be stored. Such a wireless router may be located in a residence, for example. A client device may then access the address from the wireless router where it is stored.

DHCP server 220 may manage a plurality of Internet protocol (IP) addresses and information about wireless router configuration parameters such as a default wireless router, a domain name, and/or associated domain name system (DNS) servers, for example. Upon receipt of a valid request from, say wireless router 230, DHCP server 220 may assign an IP address to wireless router 230, a lease (the length of time for which such an assignment is valid), and/or other IP configuration parameters, such as a subnet mask or a default wireless router. Such a wireless router request for an IP address may be initiated soon after an initialization process of the wireless router. Such an IP address assignment process may be completed before a wireless router can initiate IP-based communication with other hosts on a network, for example. Note that such a location received and stored in a wireless router need not expire with a lease of an IP address.

Depending on implementation, the DHCP server may allocate IP addresses using dynamic allocation, automatic allocation, or static allocation, just to name a few possible processes. In dynamic allocation, a network administrator may assign a range of IP addresses to a particular DHCP server, and each wireless router on the network may include IP software configured to request an IP address from the DHCP server during network initialization, for example. Such a process may involve controllable time periods, allowing the DHCP server to reclaim and/or reallocate IP addresses based on such time periods, for example. In automatic allocation, a DHCP server may permanently assign an available IP address to a requesting wireless router from a range of IP addresses defined by an administrator. Such an assignment may be performed, for example, for a particular machine or for machines at a particular physical address. Such an allocation process may be similar to the process for dynamic allocation, as explained above. However, the DHCP server may maintain a table of past IP address assignments so that the DHCP server may preferentially assign to a wireless router the same IP address that the wireless router previously had. In one particular implementation, a wireless router may comprise a cable/DSL modem and/or a wireless router or other combination of similar capabilities. In static allocation, a DHCP server may allocate an IP address based at least in part on a table including MAC address/IP address pairs, which may be manually entered into the table by, for example, a network administrator. Accordingly, only requesting wireless routers having a MAC address listed in this table may be allocated an IP address. Of course, such allocation processes are merely examples, and claimed subject matter is not so limited.

As explained above, a DHCP server may assign an IP address to a wireless router. In a further process, in an implementation, a wireless router may assign virtual IP addresses to client devices hosted by the wireless router. Here, a virtual IP address refers to a network address that is visible to the wireless router and/or a subnet defined by the virtual IP address but not visible from the Internet with which the wireless router is communicating. Here, such an address may be provided by the wireless router to be associated with a particular client device.

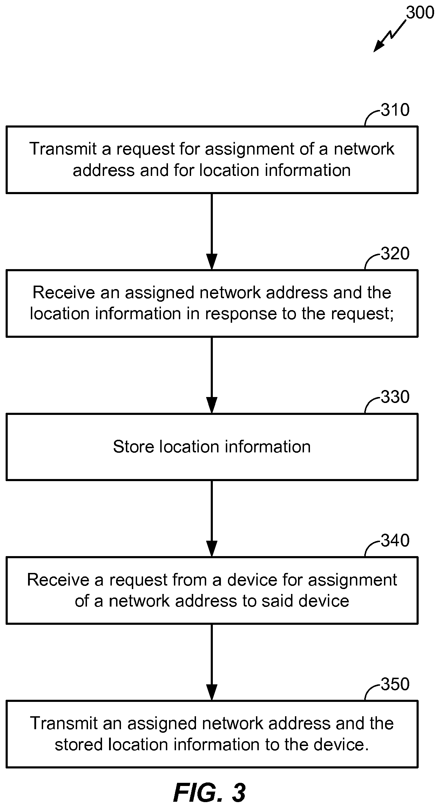

FIG. 3 is a flow diagram of a process 300 for determining a location of a client device, according to an implementation. At block 310, a wireless router, such as wireless router 230 shown in FIG. 2 for example, may transmit a request for an assignment of a network address. As described above, such a request may be received by a DHCP server that may assign an IP address to the requesting wireless router in response to the request. A wireless router's request for a network assignment may also include a request for location information of the wireless router. Such a request may also be received by a DHCP server that may maintain information regarding physical locations of one or more wireless routers. In an example wherein an ISP hosts a DHCP server, such physical location information may include manually-entered information regarding an ISP customer, including the customer's name, street address, billing information, and so on. Accordingly, a DHCP server may maintain at least a portion of such customer information, particularly street address information, for example. The street address information may also be hosted in a customer information database server. Such customer information may thus include physical locations of one or more wireless routers.

In another example, an ISP hosting a DHCP server may partition a network that it serves into multiple subnets comprising a network of wireless routers and/or client devices. Accordingly, a DHCP server, which may serve a relatively large number of clients in a dispersed area such as a city, may allocate its clients among multiple subnets including fewer clients associated with smaller regions. For example, wireless routers and/or client devices within a particular subnet may share a common IP address routing prefix. Such a DHCP server may maintain location information regarding networked wireless routers and/or client devices included in one or more subnets: wireless routers and/or client devices included in a particular subnet may also share similar physical locations. For example, one subnet may be associated with one residential neighborhood while another subnet may be associated with another residential neighborhood. In a particular implementation, street addresses, neighborhoods, and/or other relatively localized regions may be converted into geodetic latitude/longitude coordinates. Of course, such processes involving a DHCP server are merely examples, and claimed subject matter is not so limited.

Continuing with FIG. 3, at block 320, wireless router 230 may receive an assigned network address and location information descriptive of the location of wireless router 230 from a DHCP server in response to the wireless router's request. At block 330, wireless router 230 may store received location information in a memory (e.g., volatile or non-volatile memory device). At block 340, wireless router 230 may receive a request from a client device that is served by wireless router 230, such as client device 250 shown in FIG. 2 for example, for assignment of a network address to the client device. In a particular implementation, such a request from a client device may prompt wireless router 230 to assign a network address. In a particular implementation, such a response may also include transmission of location information descriptive of a physical location of the particular requesting client device. Accordingly, at block 350, wireless router 230 may transmit an assigned network address and stored location information (stored at block 330) to the client device. In one implementation, a network address assigned to a wireless router by a DHCP server may be different from a network address assigned to a client device by a wireless router that serves the client device. In a first example, a DHCP server may assign a network address, such as an IP address, to a wireless router. Such a network address may be recognized by a network (e.g., LAN, WAN, and/or Internet) to which the DHCP server and/or the wireless router are communicatively connected. In contrast, a wireless router may assign a network address to a client device served by the wireless router, wherein such a network address may not be recognized by the network/Internet through which the wireless router and the DHCP server are connected. In the latter case, such a network address may comprise a virtual IP address, which may be applicable to addressing communication between the wireless router and the client device or between client devices of that wireless router.

In a second example, a network address assigned to a wireless router by a DHCP server may have a different value and/or a different format from that of a network address assigned to a client device of that wireless router. For instance, particular values and/or formats of network addresses, which may comprise virtual IP addresses, may be assigned to client devices by a wireless router based at least in part on a particular wireless router and/or subnet of the wireless router that serves the client devices. Additionally, a wireless router may perform a mapping process to map a network address assigned by DHCP server into an assigned virtual IP address. As mentioned above, such a wireless router and/or subnet may serve a plurality of client devices having a common physical location or region. Accordingly, a network address assigned to a client device by a wireless router may depend, at least in part, on a physical location of the client device. In one particular implementation, a client device may determine its own location upon receiving a virtual IP address assignment by a wireless router if the client device has *a priori* knowledge regarding how the wireless router assigns such addresses based on the particular wireless router and/or subnet that serves the client device. In other words, a client device may determine which wireless router and/or subnet serves the client device from the assigned virtual IP address. In another particular implementation, a client device may be able to calculate its own location, via GPS for example, and may share location information with a wireless router, which may then maintain and/or re-distribute such information to other client devices. Additionally, in one implementation, wireless routers may involve relatively short ranges so that one may consider that client devices associated with the same wireless router are essentially co-located. Of course, such address assignments and location determination processes are merely examples, and claimed subject matter is not so limited.

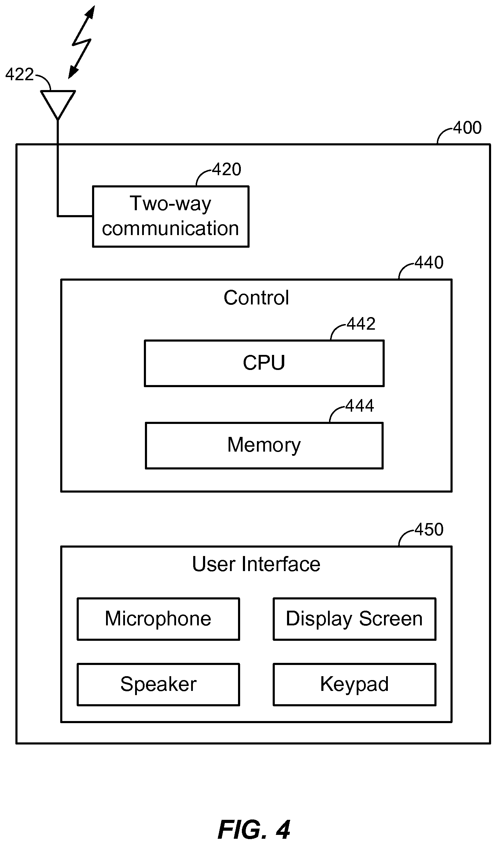

FIG. 4 is a schematic diagram of a device 400 capable of communication with a network, according to one implementation. Such a network may be wireless, for example. Such a device may include a client device, such as client device 250 shown in FIG. 2, for example. In the case of a wireless, mobile client device, device 400 may include a two-way communication system 420, such as but not limited to a cellular communication system, which may transmit and receive signals via antenna 422. The communication system 420 may include a modem adapted to process information for communication in one or more of the aforementioned networks. In one alternative implementation, device 400 may include a position location system, such as an SPS receiver to receive SPS signals. The modem and SPS receiver may communicate with one another, and such communication may include, for example, the cellular identification of the device, estimates of time and/or location, frequency, or other radio information. In another implementation, device 400 may not include a position location system, so that the device lacks any inherent ability to acquire SPS signals.

Control 440 may comprise a special purpose computing platform, such as a central processing unit (CPU) 442 and associated memory 444, hardware, software, and firmware. It will be understood as used herein that the CPU 442 can, but need not necessarily include, one or more microprocessors, embedded processors, controllers, application specific integrated circuits (ASICs), digital signal processors (DSPs), and the like. The term CPU is intended to describe the functions implemented by the system rather than specific hardware. In an alternative implementation memory 444 may include a look-up table, as discussed above. Memory 444 may store signals that represent machine-readable instructions which, if executed by CPU 442, may enable device 400 to determine its location, as in at least the implementations described above. Such machine-readable instructions may be downloaded, e.g., received via two-way communication 420, from a remote entity such as a wireless carrier, for example. Machine-readable instructions may include an application that allows device 400 to identify and extract identification information of a cellular base station included in a pilot signal. Such an application may also include a look-up table of cellular base station information for a region or the world. Machine-readable instructions may also include a Kalman filter, as described above. Of course, claimed subject matter is not limited to these examples, which are only described here to help illustrate various implementations. Memory 444 may comprise one or more types of storage media identified above. A user interface 450 may allow a user to enter information into and receive information, such as voice or data, from device 400. The user interface 450 may include, for example, a keypad, a display screen, a microphone, and a speaker.

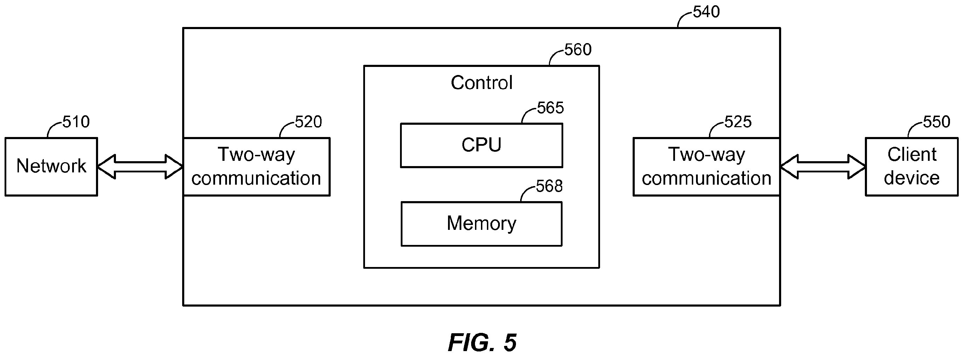

FIG. 5 is a schematic diagram of a wireless router 540 capable of communication with a network 510 and/or a client device 550, according to one implementation. For example, wireless router 540 may comprise wireless routers 230 and/or 240 shown in FIG. 2. Wireless router 540 may include a control portion 560, a first two-way communication system 520, and a second two-way communication system 525. In one implementation, two-way communication system 520 may transmit and receive signals to and from network 510. In a particular implementation, network 510 may comprise a DHCP server, such as DHCP server 220 shown in FIG. 2, for example. Two-way communication system 520 may include a modem adapted to process information for communication with network 510. In another implementation, two-way communication system 525 may transmit and receive signals to and from one or more client devices 550, such as client devices 250 shown in FIG. 2, for example. Two-way communication system 525 may include a modem adapted to process information for communication with client devices 550.

Control 560 may comprise a special purpose computing platform, such as a central processing unit (CPU) 565 and associated memory 568, hardware, software, and firmware. It will be understood as used herein that CPU 565 may, but need not necessarily include, one or more microprocessors, embedded processors, controllers, application specific integrated circuits (ASICs), digital signal processors (DSPs), and the like. The term CPU is intended to describe the functions implemented by the system rather than specific hardware. In an alternative implementation, memory 568 may include a look-up table and/or database, as discussed above. Memory 568 may store signals that represent machine-readable instructions which, if executed by CPU 565, may enable wireless router 540 to communicate with network 510 and client devices 550, as in at least the implementations described above. Such machine-readable instructions may be downloaded, e.g., received via two-way communication 520 and/or 525, from a remote entity such as a network, which may or may not be wireless, for example. Of course, claimed subject matter is not limited to these examples, which are only described here to help illustrate various implementations.

Methodologies described herein may be implemented by various means depending upon applications according to particular features and/or examples. For example, such methodologies may be implemented in hardware, firmware, software, and/or combinations thereof. In a hardware implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices units designed to perform the functions described herein, and/or combinations thereof.

For a firmware and/or software implementation, methodologies may be implemented with modules (e.g., procedures, functions, and so on) that perform the functions described herein. Any machine-readable medium tangibly embodying instructions may be used in implementing the methodologies described herein. For example, software codes that represent electronic signals, such as digital electronic signals, may be stored in a memory, for example the memory of a mobile station, and executed by a specialized processor, such as CPU 442 in FIG. 4. Memory may be implemented within the processor or external to the processor. As used herein the term "memory" refers to any type of long term, short term, volatile, nonvolatile, or other memory and is not to be limited to any particular type of memory or number of memories, or type of media upon which memory is stored.

In one or more exemplary embodiments, the functions described may be implemented in hardware, software, firmware, or any combination thereof. If implemented in software, the functions may be stored as one or more instructions or code that represent signals on a computer-readable medium. Computer-readable media includes physical computer storage media. Transmission media includes physical transmission media. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Some portions of the detailed description above are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims.

## Claims

1. A method comprising:
transmitting from a transceiver one or more signals representative of a first request for assignment of a network address (310);
receiving at said transceiver one or more signals representative of a first assigned network address in response to said first request;
receiving at said transceiver one or more signals representative of location information (320);
storing information indicative of said location information in a memory device (330);
**characterized by**
receiving at a second transceiver one or more signals representative of a request from a device for assignment of a second network address to said device (340); and
transmitting from said second transceiver one or more signals representative of said second assigned network address and said stored information indicative of said location information to said device in response to said second request (350).

2. The method of claim 1, wherein said receiving one or more signals representative of location information is performed in response to said first request.

3. The method of claim 1, further comprising mapping said second assigned network address onto said first assigned network address assigned by a Dynamic Host Configuration Protocol, DHCP, server.

4. The method of claim 3, wherein said second assigned network address comprises a virtual address assigned by a wireless router via said mapping.

5. The method of claim 1, wherein said first assigned network address comprises a value different from that of said second assigned network address.

6. The method of claim 1, wherein said storing said one or more signals representative of said location information further comprises storing said location information indicative of a physical location of a wireless router at said wireless router.

7. The method of claim 1, wherein said first assigned network address comprises an address to be assigned by a Dynamic Host Configuration Protocol, DHCP, server.

8. The method of claim 4, wherein said device comprises a client device of said wireless router.

9. The method of claim 4, wherein said device queries a management information base, MIB, maintained on said wireless router with a request for updated and/or current location information.

10. An apparatus (230, 240, 540) comprising:
means for transmitting using a transceiver (520) one or more signals representative of a first request for assignment of a network address;
means for receiving using said transceiver one or more signals representative of a first assigned network address in response to said first request;
means for receiving using said transceiver one or more signals representative of location information;
means for storing information indicative of said location information in a memory device (568);
**characterized by** comprising
means for receiving using a second transceiver (525) one or more signals representative of a request from a device (250A..F, 550) for assignment of a network address to said device; and
means for transmitting using said second transceiver one or more signals representative of a second assigned network address and said stored location information to said device.

11. The apparatus of claim 10, wherein said first request includes a request for said location information.

12. The apparatus of claim 10, further comprising means for mapping said second assigned network address onto said first assigned network address assigned by a Dynamic Host Configuration Protocol, DHCP, server.

13. The apparatus of claim 10, or the method of claim 1, wherein said device comprises a client device of a wireless router, and preferably wherein said client device comprises a mobile device.

14. The apparatus of claim 10, or the method of claim 1, wherein said location information comprises information indicative of a physical location of a wireless router.

15. A storage medium comprising machine-readable instructions stored thereon which, if executed by a special purpose computing device, are adapted to enable said special purpose computing device to carry out the method steps of claims 1-9, or 13-14.

## Patentansprüche

1. Ein Verfahren, das Folgendes aufweist:
Senden, von einem Transceiver, eines oder mehrerer Signale, die eine erste Anfrage hinsichtlich einer Zuweisung einer Netzwerkadresse (310) darstellen;
Empfangen, an dem Transceiver, eines oder mehrerer Signale, die eine erste zugewiesenen Netzwerkadresse ansprechend auf die erste Anfrage darstellen;
Empfangen, an dem Transceiver, eines oder mehrerer Signale, die Standortinformation (320) darstellen;
Speichern von Information, die die Standortinformation anzeigt, in einer Speichereinrichtung (230), **gekennzeichnet durch**
Empfangen, an einem zweiten Transceiver, eines oder mehrerer Signale, die eine Anfrage von einer Einrichtung hinsichtlich einer Zuweisung einer zweiten Netzwerkadresse zu der Einrichtung (340) darstellen; und
Senden, von dem zweiten Transceiver, eines oder mehrerer Signale, die die zweite zugewiesenen Netzwerkadresse und die gespeicherte Information, die die Standortinformation anzeigt, darstellen, an die Einrichtung ansprechend auf die zweite Anfrage (350).

2. Verfahren nach Anspruch 1, wobei das Empfangen eines oder mehrerer Signale, die die Standortinformation darstellen, ansprechend auf die erste Anfrage durchgeführt wird.

3. Verfahren nach Anspruch 1, das weiter Zuweisen bzw. Abbilden der zweiten zugewiesenen Netzwerkadresse auf die erste zugewiesene Netzwerkadresse, die durch einen DHCP-Server (DHCP = Dynamic Host Configuration Protocol) zugewiesen worden ist, aufweist.

4. Verfahren nach Anspruch 3, wobei die zweite zugewiesene Netzwerkadresse eine virtuelle Adresse aufweist, die durch einen Drahtlos-Router über die Abbildung zugewiesen wird.

5. Verfahren nach Anspruch 1, wobei die erste zugewiesene Netzwerkadresse einen Wert aufweist, der sich von dem der zweiten zugewiesenen Netzwerkadresse unterscheidet.

6. Verfahren nach Anspruch 1, wobei das Speichern des einen oder der mehreren Signale, die Standortinformation darstellen, weiter Speichern der Standortinformation, die einen physischen Standort eines Drahtlos-Routers anzeigt, an dem Drahtlos-Router aufweist.

7. Verfahren nach Anspruch 1, wobei die erste zugewiesene Netzwerkadresse eine Adresse aufweist, die durch einen DHCP-Server (DHCP = Dynamic Host Configuration Protocol) zugewiesen werden soll.

8. Verfahren nach Anspruch 4, wobei die Einrichtung eine Client-Einrichtung des Drahtlos-Routers aufweist.

9. Verfahren nach Anspruch 4, wobei die Einrichtung eine Management- bzw. Verwaltungsinformationsbasis bzw. MIB (MIB = management information base) abfragt, die auf dem Drahtlos-Router geführt wird, und zwar mit einer Anfrage hinsichtlich aktualisierter und/oder aktueller Standortinformation.

10. Eine Vorrichtung (230, 240, 540), die Folgendes aufweist:
Mittel zum Senden, unter Verwendung eines Transceivers (520), eines oder mehrerer Signale, die eine erste Anfrage hinsichtlich einer Zuweisung einer Netzwerkadresse darstellen;
Mittel zum Empfangen, unter Verwendung des Transceivers, eines oder mehrerer Signale, die die erste zugewiesene Netzwerkadresse darstellen ansprechend auf die erste Anfrage;
Mittel zum Empfangen, unter Verwendung des Transceivers, eines oder mehrerer Signale, die Standortinformation darstellen;
Mittel zum Speichern von Information, die die Standortinformation anzeigt, in einer Speichereinrichtung (568);
**dadurch gekennzeichnet, dass** sie Folgendes aufweist:
Mittel zum Empfangen, unter Verwendung eines zweiten Transceivers (525), eines oder mehrerer Signale, die eine Anfrage von einer Einrichtung (250A..F, 550) hinsichtlich einer Zuweisung einer Netzwerkadresse zu der Einrichtung darstellen; und
Mittel zum Senden, unter Verwendung des zweiten Transceivers, eines oder mehrerer Signale, die eine zweite zugewiesene Netzwerkadresse und die gespeicherte Standortinformation darstellen, an die Einrichtung.

11. Vorrichtung nach Anspruch 10, wobei die erste Anfrage eine Anfrage hinsichtlich Standortinformation beinhaltet.

12. Vorrichtung nach Anspruch 10, die weiter Mittel aufweist zum Zuordnen bzw. Abbilden der zweiten zugewiesenen Netzwerkadresse auf die erste zugewiesene Netzwerkadresse, die durch einen DHCP-Server (DHCP = Dynamic Host Configuration Protocol) zugewiesen worden ist.

13. Vorrichtung nach Anspruch 10 oder Verfahren nach Anspruch 1, wobei die Einrichtung eine Client-Einrichtung eines Drahtlos-Routers aufweist und wobei vorzugsweise die Client-Einrichtung eine Mobileinrichtung aufweist.

14. Vorrichtung nach Anspruch 10 oder Verfahren nach Anspruch 1, wobei die Standortinformation Information aufweist, die einen physischen Standort eines Drahtlos-Routers aufweist.

15. Ein Speichermedium, das maschinenlesbare Instruktionen aufweist, die darauf gespeichert sind, die, wenn sie durch eine Recheneinrichtung mit speziellem Einsatzzweck ausgeführt werden, ausgelegt sind es der Rechnereinrichtung mit speziellem Einsatzzweck zu ermöglichen, die Verfahrensschritte der Ansprüche 1-9 oder 13-14 durchzuführen.

## Revendications

1. Procédé comprenant :
émettre à partir d'un émetteur-récepteur un ou plusieurs signaux représentatifs d'une première demande d'attribution d'une adresse réseau (310) ;
recevoir au niveau de l'émetteur-récepteur un ou plusieurs signaux représentatifs d'une première adresse réseau attribuée en réponse à la première demande ;
recevoir au niveau de l'émetteur-récepteur un ou plusieurs signaux représentatifs d'informations d'emplacement (320) ;
mémoriser des informations indicatives des informations d'emplacement dans un dispositif mémoire (330) ;
**caractérisé par**
recevoir au niveau d'un deuxième émetteur-récepteur un ou plusieurs signaux représentatifs d'une demande à partir d'un dispositif pour l'attribution d'une deuxième adresse réseau au dispositif (340) ; et
émettre à partir du deuxième émetteur-récepteur un ou plusieurs signaux représentatifs de la deuxième adresse réseau attribuée et des informations mémorisées indicatives des informations d'emplacement vers le dispositif en réponse à la deuxième demande (350).

2. Procédé selon la revendication 1, dans lequel la réception d'un ou plusieurs signaux représentatifs d'informations d'emplacement est réalisée en réponse à la première demande.

3. Procédé selon la revendication 1, comprenant en outre un mappage de la deuxième adresse réseau attribuée sur la première adresse réseau attribuée, attribué par un serveur de protocole de configuration d'hôte dynamique, DHCP.

4. Procédé selon la revendication 3, dans lequel la deuxième adresse réseau attribuée comprend une adresse virtuelle attribuée par un routeur sans fil par l'intermédiaire dudit mappage.

5. Procédé selon la revendication 1, dans lequel la première adresse réseau attribuée a une valeur différente de celle de la deuxième adresse réseau attribuée.

6. Procédé selon la revendication 1, dans lequel la mémorisation desdits un ou plusieurs signaux représentatifs des informations d'emplacement comprend en outre la mémorisation des informations d'emplacement indicatives d'un emplacement physique d'un routeur sans fil au niveau du routeur sans fil.

7. Procédé selon la revendication 1, dans lequel la première adresse réseau attribuée comprend une adresse destinée à être attribuée par un serveur de protocole de configuration d'hôte dynamique, DHCP.

8. Procédé selon la revendication 4, dans lequel le dispositif comprend un dispositif client du routeur sans fil.

9. Procédé selon la revendication 4, dans lequel le dispositif interroge une base d'informations de gestion, MIB, maintenue sur le routeur sans fil avec une demande d'informations d'emplacement mises à jour et/ou courante.

10. Dispositif (230, 240, 540) comprenant :
des moyens pour émettre en utilisant un émetteur-récepteur (520) un ou plusieurs signaux représentatifs d'une première demande d'attribution d'une adresse réseau ;
des moyens pour recevoir en utilisant l'émetteur-récepteur un ou plusieurs signaux représentatifs d'une première adresse réseau attribuée en réponse à la première demande ;
des moyens pour recevoir en utilisant l'émetteur-récepteur un ou plusieurs signaux représentatifs d'informations d'emplacement ;
des moyens pour mémoriser des informations indicatives des informations d'emplacement dans un dispositif mémoire (568) ;
**caractérisé en ce qu'**il comprend
des moyens pour recevoir en utilisant un deuxième émetteur-récepteur (525) un ou plusieurs signaux représentatifs d'une demande à partir d'un dispositif (250A ...F, 550) pour l'attribution d'une adresse réseau au dispositif ; et
des moyens pour émettre en utilisant le deuxième émetteur-récepteur un ou plusieurs signaux représentatifs d'une deuxième adresse réseau attribuée et des informations d'emplacement mémorisées vers le dispositif.

11. Dispositif selon la revendication 10, dans lequel la première demande comprend une demande des informations d'emplacement.

12. Dispositif selon la revendication 10, comprenant en outre des moyens pour mapper la deuxième adresse réseau attribuée sur la première adresse réseau attribuée, attribué par un serveur de protocole de configuration d'hôte dynamique, DHCP.

13. Dispositif selon la revendication 10, ou procédé selon la revendication 1, dans lequel dispositif comprend un dispositif client d'un routeur sans fil, de préférence dans lequel le dispositif client comprend un dispositif mobile.

14. Dispositif selon la revendication 10, ou procédé selon la revendication 1, dans lequel les informations d'emplacement comprennent des informations indicatives d'un emplacement physique d'un routeur sans fil.

15. Support de stockage comprenant des instructions lisibles par une machine mémorisées sur lui, instructions qui, si elles sont exécutées par un dispositif informatique à usage spécifique, sont adaptées à permettre au dispositif informatique à usage spécifique de réaliser les étapes de procédé des revendications 1 à 9, ou 13 à 14.
